# EUROPÄISCHE PATENTSCHRIFT

(11) **EP 2 408 072 B1**
(45) Veröffentlichungstag und Bekanntmachung des Hinweises auf die Patenterteilung: **01.02.2017**
(21) Anmeldenummer: 11173420.8
(22) Anmeldetag: 11.07.2011
(51) Int. Cl.: H02G 5/02, H02B 1/20

(54) **Verteilervorrichtung**
Distributor device
Dispositif de répartition

(30) Priorität: 15.07.2010 DE 102010027343
(43) Veröffentlichungstag der Anmeldung: 18.01.2012
(73) Patentinhaber: Hager Electro GmbH & Co. KG, 66440 Blieskastel (DE)
(72) Erfinder: Isberg, Martin, 66440 Blieskastel (DE); Loew, Thomas, 66386 St. Ingbert (DE); Schmitt, Christian, 66287 Quierschied (DE); Castenmiller, Paul, 5373 KB Herpen (NL)
(74) Vertreter: Nuss, Laurent

(56) Entgegenhaltungen:
- EP-A1- 0 589 775
- EP-A2- 0 695 013
- WO-A1-01/82433
- DE-A1- 2 436 154
- FR-A1- 2 715 775

## Beschreibung

Die Erfindung betrifft eine Verteilervorrichtung der Elektroinstallation von Gebäuden, mit wenigstens einer Sammelschiene, an die mehrere Stromleiter anschließbar sind und mit in Schienenlängsrichtung zueinander im Abstand angeordneten Einrichtungen zur Halterung der Sammelschiene, wobei die Halterungseinrichtungen zur Halterung der Sammelschiene in einer Vielzahl einstellbarer, auf die Schienenlängsachse bezogener Drehpositionen vorgesehen sind und je ein mit der Sammelschiene verbindbares, in einer Drehlagerung arretierbares Drehelement aufweisen, das eine durch das Drehelement durchgehende Ausnehmung für die Einführung der Sammelschiene umfasst.

Eine solche Verteilervorrichtung trägt dem Umstand Rechnung, dass je nach Dimensionierung der Verteilervorrichtung und insbesondere der Querschnitte der Stromleiter der Anschluss der Stromleiter an die Sammelschienen mit verhältnismäßig großem Kraftaufwand verbunden sein kann. Durch die Möglichkeit zur Drehung der Sammelschiene lässt sich dieser Kraftaufwand verringern.

Verteilervorrichtungen der eingangs genannten Art gehen aus der EP 0 589 775 A1 sowie der DE-OS 24 36 154 hervor. Die durch das Drehelement dieser bekannten Vorrichtungen durchgehende Ausnehmung weist einen dem Querschnitt der Sammelschiene angepassten Querschnitt auf.

Der Erfindung liegt die Aufgabe zugrunde, eine neue Verteilervorrichtung der eingangs genannten Art zu schaffen, durch welche Anschlussarbeiten weiter erleichtert werden.

Die diese Aufgabe lösende Verteilervorrichtung nach der Erfindung ist dadurch gekennzeichnet, dass in der Ausnehmung mehrere, für Sammelschienen mit unterschiedlichem Querschnitt auswählbare Sitze gebildet sind.

Zweckmäßig kann durch die Erfindung ein und dieselbe Halterungseinrichtung für Leiterschienen mit unterschiedlichen Querschnitten eingesetzt werden.

Vorteilhaft kann die Leiterschiene und damit ein an der Leiterschiene anzubringendes Verbindungselement für die Verbindung der Leiterschiene mit einem Stromleiter in eine Drehposition gebracht werden, in welcher der für den Anschluss erforderliche Biegeradius des Stromleiters möglichst gering ist. Entsprechend verringern sich erforderliche Montagekräfte. Auch die sich bei Stromfluss durch die Leiter ergebenden mechanischen Belastungen der Verteilervorrichtung lassen sich reduzieren.

Die Drehposition der Sammelschiene kann stufenlos einstellbar sein. In einer alternativen Ausführungsform erfolgt die Einstellung der Drehposition in Stufen, z.B. entsprechend dem Versatz ineinandergreifender Zahnungen um jeweils einen Zahn.

Die Drehlagerung kann durch mehrere Teile gebildet und das Drehelement in der Drehlagerung durch Zusammendrücken der Teile in der Art von Bremsbacken in der eingestellten Drehposition arretierbar sein.

Vorzugsweise weist die Halterungseinrichtung mehrere Drehlagerungen zur Aufnahme mehrerer Drehelemente für die Verbindung mit mehreren, ein Anschlussfeld bildenden Sammelschienen auf.

Vorzugsweise ist das Drehelement als Abschnitt einer Welle ausgebildet, insbesondere als kurzer, scheibenförmiger Wellenabschnitt.

In einer weiteren Ausführungsform der Erfindung umfasst das Drehelement eine, vorzugsweise in Richtung seiner Drehachse durchgehende, Ausnehmung für die Einführung der Sammelschiene.

Vorzugsweise ist die Sammelschiene in der Ausnehmung verklemmbar, insbesondere durch ein in die Ausnehmung ferner einführbares Füllstück.

Ebenso kann zur Verklemmung von Sammelschienen mit unterschiedlichem Querschnitt ein einziges Füllstück eingesetzt werden, das sich durch Änderung seiner Stellung an den jeweiligen Sammelschienenquerschnitt anpassen lässt.

In weiterer vorteilhafter Ausgestaltung der Erfindung ist das Drehelement mehrteilig, insbesondere zweiteilig ausgebildet, vorzugsweise derart, dass sich die Sammelschiene im demontierten Zustand der Teile in einer Richtung senkrecht zu ihrer Drehachse in die Ausnehmung einführen lässt. Dies erleichtert die Montage der Verteilervorrichtung.

Das Drehelement kann einen radial vorstehenden Führungssteg für den Eingriff in eine Führungsrille in der Drehlagerung aufweisen, der für eine Festlegung der Anordnung aus Sammelschiene und Drehelement in axialer Richtung sorgt.

Die Erfindung wird nachfolgend anhand von Ausführungsbeispielen und der beiliegenden, sich auf eines dieser Ausführungsbeispiel beziehenden Zeichnungen weiter erläutert. Es zeigen:

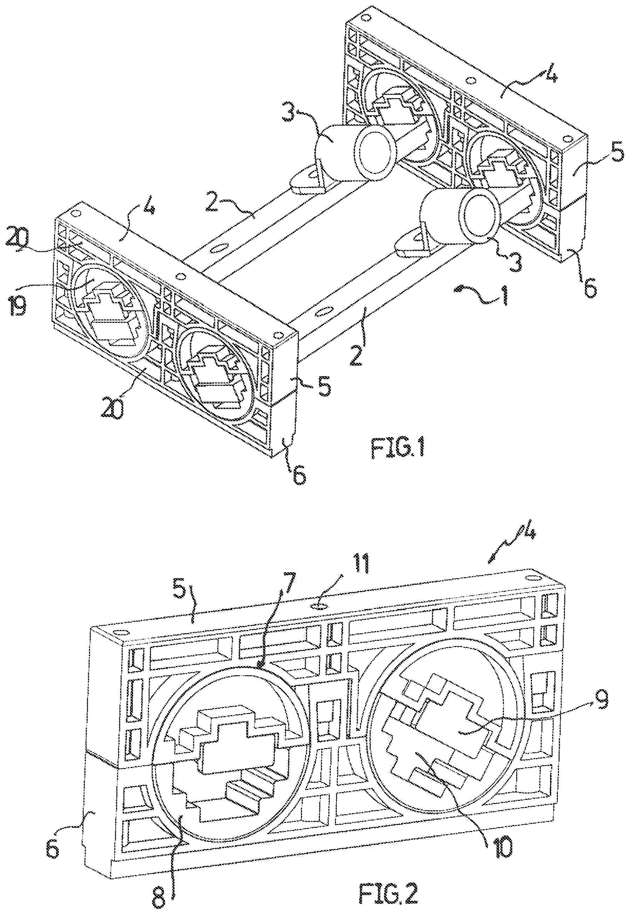

- Fig. 1: ein Anschlussfeld einer erfindungsgemäßen Verteilervorrichtung in perspektivischer Ansicht,
- Fig. 2: eine in dem Anschlussfeld von Fig. 1 verwendete Halterungseinrichtung für Sammelschienen.
- Fig. 3: eine Teildarstellung des Anschlussfeldes von Fig. 1 mit geänderter Drehposition der Sammelschienen, und
- Fig. 4: eine die Verwendbarkeit von Sammelschienen mit unterschiedlichem Querschnitt erläuternde Darstellung.

Ein Anschlussfeld 1 einer Verteilervorrichtung der Elektroinstallation von Gebäuden umfasst zueinander im Abstand angeordnete Sammelschienen 2 aus Kupfer, an die über Verbindungselemente 3 jeweils mehrere Stromkabel (nicht gezeigt) anschließbar sind. An ihren beiden freien Enden sind die Sammelschienen 2 mit je einer Halterungseinrichtung 4 verbunden. Die Halterungseinrichtungen 4 können ihrerseits mit (nicht gezeigten) Trägerschienen der Verteilervorrichtung verbunden sein.

Die Halterungseinrichtungen 4 bestehen in dem gezeigten Ausführungsbeispiel jeweils aus Halteteilen 5 und 6, zwischen denen zwei Drehlagerungen 7 für ein Drehelement 8 gebildet sind, das mit je einer der Sammelschienen 2 verbindbar ist. Die Halterungseinrichtungen 4 umfassen ferner ein Füllstück 9 zur Anordnung in einer die Drehelemente 8 durchsetzenden, jeweils ein Ende der Sammelschienen 2 aufnehmenden Ausnehmung 10. Zwischen den Halteteilen 5,6 bestehen drei Schraubverbindungen 11.

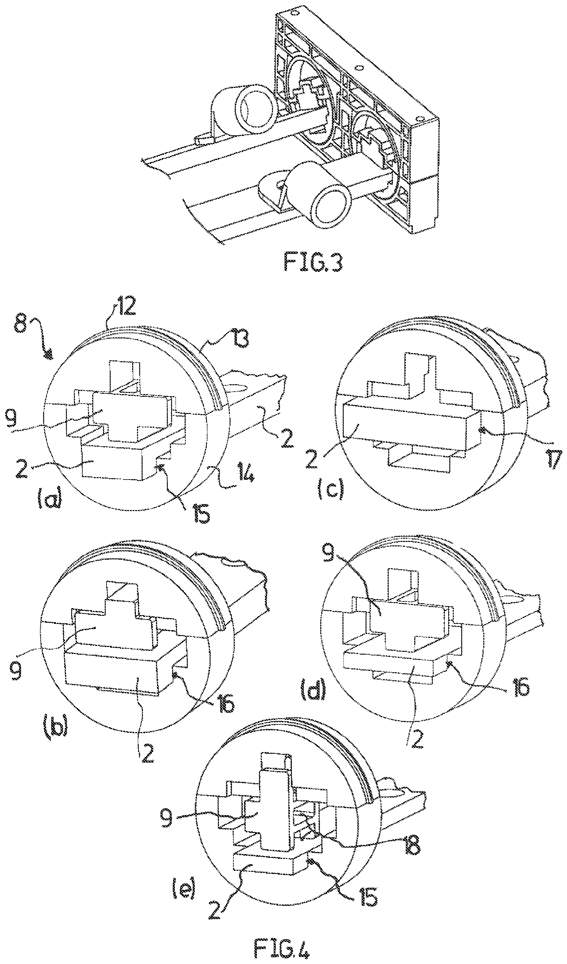

Wie insbesondere Fig. 4 erkennen lässt, sind die Drehelemente 8 in dem gezeigten Ausführungsbeispiel als scheibenförmiger Abschnitte einer Welle mit einer Mantelfläche 21 ausgebildet. Wenigstens über einen Teil der Mantelfläche 21 erstreckt sich ein radial vorstehender Führungssteg 12 für den Eingriff in eine (nicht gezeigte) Rille in dem Halteteil 5 oder/und 6. Die Drehelemente 8 bestehen jeweils aus zwei Teilen 13 und 14, welche im zusammengesetzten Zustand die axial durchgehende Ausnehmung 10 umschließen.

In der Ausnehmung 10 sind mehrere Sitze 15 bis 17 für die Aufnahme von Sammelschienen 2 mit unterschiedlichem Querschnitt gebildet. Das Füllstück 9 und die übrige Ausnehmung 10 sind so geformt, dass für jeden Sammelschienenquerschnitt eine Stellung des Füllstücks 9 existiert, in welcher das Füllstück 9 zur Verklemmung der betreffenden Sammelschiene 2 in der Ausnehmung 10 in der Lage ist, Der Sitz 15 dient der Aufnahme von unterschiedlich hohen Sammelschienen 2 geringer Breite (Fig. 4a und e), der Sitz 16 der Aufnahme von unterschiedlich hohen Sammelschienen 2 größerer Breite (Fig. 4b und d). Der Sitz 17 nimmt die breiteste Sammelschiene 2 auf, wobei diese Sammelschiene in der Ausnehmung 10 ohne Füllstück 9 verkiemmbar ist.

Wie insbesondere aus Fig. 4e hervorgeht, weist das Füllstück 9 Materialhäufungen vermeidende Ausnehmungen 18 auf. Dem gleichen Zweck dienen Ausnehmungen 19 im Drehelement 8 und Ausnehmungen 20 in den Halteteilen 5,6. Die Halteteile 5,6 sind mit Trögerschienen der betreffenden Verteilervorrichtungen verbindbar.

Vor dem Anschluss von Stromkabeln an die Sammelschienen 2 über die Verbindungselemente 3 können im nicht fest angezogenen Zustand der Schraubverbindungen 11 die Sammelschienen 2 in eine bezogen auf ihre Längsachse zweckmäßige, die Kabelzuführung erleichternde Drehstellung gebracht werden. Zu deren Fixierung werden die Schraubverbindungen 11 dann unter Arretierung der Drehelemente 8 in den Drehlagerungen 7 fest angezogen. Die Halteteile 5,6 umschließen dann die Drehelemente 8 in der Art von Bremsbacken. Die in den Ausnehmungen 8 ggf. durch das Füllstück 9 eingeklemmten Sammelschienen 2 sind somit stabil in der entsprechenden Drehstellung gehalten. Die Arretierung der Drehelemente 8 und damit der Leiterschienen 2 in der gewünschten Drehstellung kann nacheinander erfolgen, indem die Schraubverbindungen 11 der Reihe nach festgezogen werden.

Es versteht sich, dass die Halteteile 5,6 abweichend von dem gezeigten Ausführungsbeispiel zur Bildung von mehr als nur zwei Drehlagerungen 7 entsprechend einer größeren Zahl von Sammelschienen 2 ausgebildet sein können.
Auch kann der Querschnitt der Leiterschienen 2 von dem hier gezeigten Rechteck abweichen und z.B. H- oder T-förmig sein. Entsprechend ließe sich das Füllstück 9 an solche Schienenprofile anpassen.
Anstelle der hier beschriebenen stufenloser Verstellbarkeit der Drehelemente könnte eine Versteilmöglichkeit kurzen Schritten durch Aufbringen einer Zahnung auf die Mantelfläche 21 der Drehelemente und den Innenumfang der Drehlagerungen 7 erfolgen. Im letzteren Fall besteht auch bei sehr großen, durch große Ströme hervorgerufenen Belastungen eine hohe Haltesicherheit.

Um ein seitliches Heraustreten der Füllstücke 9 aus den Drehelementen 8 zu verhindern, können die Füllstücke 9 und die Teile 13,14 der Drehelemente 8 einen entsprechenden Formschluss bewirkende Formungen aufweisen, z.B. eine Randerhöhung und eine die Randerhöhung aufnehmende Randabstufung.

Um zwei längs zueinander ausgerichtete Sammelschienen nebeneinander liegender Sammelschienenanordnungen miteinander zu verbinden, könnte ein kurzes Leiterschienenstück verwendet werden, das in die betreffenden, einander axial gegenüberliegenden Drehelemente 8 der Sammelschienenanordnungen eingreift und dort gleichzeitig als Füllstück dient. Ein Füllstück könnte auch durch eine komplette Sammelschiene gebildet sein, die eine weitere Sammelschiene, mit der sie längs verbunden ist, überlappt.

Bei vertikaler Anordnung des Anschlussfeldes 1 könnte die untere Halteeinrichtung 4 eine Bodenplatte aufweisen, die ein Heraustreten der Sammelschienen nach unten verhindert.

Die Sammelschienen des Anschlussfeldes 1 können mit ihren Schmal- oder Breitseiten in einer Ebene angeordnet sein. Durch Drehung um 180 ° ist es möglich, die Breitseiten zu der genannten Ebene versetzt anzuordnen, was, ebenso wie eine schräge Anordnung der Sammelschienen, für den Anschluss von Kabeln von Vorteil sein kann.

## Patentansprüche

1. Verteilervorrichtung der Elektroinstallation von Gebäuden, mit wenigstens einer Sammelschiene (2), an die mehrere Stromleiter anschließbar sind, und mit in Schienenlängsrichtung zueinander im Abstand angeordneten Einrichtungen (5,6) zur Halterung der Sammelschiene (2), wobei die Halterungseinrichtungen (5,6) zur Halterung der Sammelschiene (2) in einer Vielzahl einstellbarer, auf die Schienenlängsachse bezogener Drehpositionen vorgesehen sind und je ein mit der Sammelschiene (2) verbundenes, in einer Drehlagerung (7) arretierbares Drehelement (8) aufweisen, das eine durch das Drehelement durchgehende Ausnehmung (10) für die Einführung der Sammelschiene (2) umfasst,
**dadurch gekennzeichnet,**
**dass** in der Ausnehmung (10) mehrere, für Sammelschienen (2) mit unterschiedlichem Querschnitt auswählbare Sitze (15-17) gebildet sind.

2. Verteilervorrichtung nach Anspruch 1,
**dadurch gekennzeichnet,**
**dass** die Drehpositionen der Sammelschiene stufenlos oder entsprechend einer Zahnung in Stufen einstellbar ist.

3. Verteilervorrichtung nach Anspruch 1 oder 2,
**dadurch gekennzeichnet,**
**dass** die Drehlagerung (7) durch mehrere Teile (5,6) gebildet und das Drehelement (8) in der Drehlagerung (7) durch Zusammendrücken der Teile (5,6) in der Art von Bremsbacken arretierbar ist.

4. Verteilervorrichtung nach einem der Ansprüche 1 bis 3,
**dadurch gekennzeichnet,**
**dass** die Halterungseinrichtungen (4) jeweils zur Aufnahme mehrerer Drehelemente (8) für die Verbindung mit mehreren, ein Anschlussfeld (1) bildenden Sammelschienen (2) vorgesehen sind.

5. Verteilervorrichtung nach einem der Ansprüche 1 bis 4,
**dadurch gekennzeichnet,**
**dass** das Drehelement (8) als, vorzugsweise scheibenförmiger, Abschnitt einer Welle ausgebildet ist.

6. Verteilervorrichtung nach einem der Ansprüche 1 bis 5,
**dadurch gekennzeichnet,**
**dass** die Sammelschiene (2) in der Ausnehmung (10), vorzugsweise durch ein Füllstück (9), verklemmbar ist.

7. Verteilervorrichtung nach einem der Ansprüche 1 bis 6,
**dadurch gekennzeichnet,**
**dass** zur Verklemmung je Ausnehmung (10) ein einziges, durch Wechsel seiner Stellung an den jeweiligen Sammelschienenquerschnitt anpassbares Füllstück (9) vorgesehen ist.

8. Verteilervorrichtung nach einem der Ansprüche 1 bis 7,
**dadurch gekennzeichnet,**
**dass** das Drehelement mehrteilig, insbesondere mit zwei Teilen (13,14) ausgebildet ist, vorzugsweise derart, dass sich die Sammelschiene (2) im demontierten Zustand der Teile (13,14) senkrecht zur Drehachse des Drehelements in die Ausnehmung (10) einführen lässt.

9. Verteilervorrichtung nach einem der Ansprüche 1 bis 8,
**dadurch gekennzeichnet,**
**dass** das Drehelement (8) einen radial vorstehenden Führungssteg (12) für den Eingriff in eine Führungsrille in der Drehlagerung (7) oder umgekehrt eine Führungsrille für den Eingriff eines entsprechenden Führungsstegs an der Drehlagerung aufweist.

## Claims

1. Distributor device for electrical installations in buildings, comprising at least one bus bar (2), to which the plurality of conductors can be connected, and devices (5, 6) arranged in longitudinal direction of the rail relative to one another for retaining the bus bar (2), wherein the retaining devices (5, 6) for retaining the bus bar (2) are provided in a plurality of adjustable rotary positions relative to the rail longitudinal axis and each comprises a rotary element (8) connected to the bus bar (2) which can be locked in a rotary bearing (7), which rotary element (8) comprises a recess (10) passing through the rotary element for the insertion of the bus bar (2),
**characterised in that** in the recess (10) a plurality of selectable seats (15-17) are formed for bus bars (2) which have different cross-sections.

2. Distributor device according to claim 1,
**characterised in that**
the rotary positions of the bus bar can be adjusted progressively or in stages according to a toothing.

3. Distributor device according to claim 1 or 2,
**characterised in that**
the rotary bearing (7) is formed by a plurality of parts (5, 6) and the rotary element (8) can be locked in the rotary bearing (7) by pushing together the parts (5, 6) in the manner of brake shoes.

4. Distributor device according to any one of claims 1 to 3,
**characterised in that**
the retaining devices (4) are provided respectively for receiving a plurality of rotary elements (8) for connecting to a plurality of bus bars (2) forming a connector panel (1).

5. Distributor device according to any one of claims 1 to 4,
**characterised in that**
the rotary element (8) is designed preferably as a disc-like section of a shaft.

6. Distributor device according to any one of claims 1 to 5,
**characterised in that**
the bus bar (2) can be clamped in the recess (10), preferably by a filler piece (9).

7. Distributor device according to any one of claims 1 to 6,
**characterised in that**
for clamping each recess (10) a single filler piece (9) is provided which can be adjusted by changing its position on the respective bus bar cross-section.

8. Distributor device according to any one of claims 1 to 7,
**characterised in that**
the rotary element is designed to have multiple parts, in particular two parts (13, 14), preferably such that the bus bar (2) can be inserted into the recess (10) in the disassembled state of the parts (13, 14) perpendicular to the rotary axis of the rotary element.

9. Distributor device according to any one of claims 1 to 8,
**characterised in that**
the rotary element (8) comprises a radial projecting guiding web (12) for engagement in a guiding groove in the rotary bearing (7) or conversely a guiding groove for the engagement of a corresponding guiding web on the rotary bearing.

## Revendications

1. Dispositif répartiteur de l'installation électrique de bâtiments, comportant au moins une barre omnibus (2) à laquelle plusieurs conducteurs de courant peuvent être raccordés, et comportant des dispositifs (5, 6) de maintien de la barre omnibus (2) disposés à distance l'un de l'autre dans la direction longitudinale de la barre, les dispositifs (5, 6) de maintien de la barre omnibus (2) étant prévus dans une pluralité de positions de rotation réglables, rapportées à l'axe longitudinal de la barre, et présentant chacun un élément rotatif (8) relié à la barre omnibus (2), qui peut être bloqué dans un palier de rotation (7) et qui comprend un évidement traversant (10) pour l'introduction de la barre omnibus (2),
**caractérisé en ce**
**que** plusieurs sièges (15-17), pouvant être choisis pour des barres omnibus (2) de différente section transversale, sont formés dans l'évidement (10).

2. Dispositif répartiteur selon la revendication 1,
**caractérisé en ce**
**que** les positions de rotation de la barre omnibus sont réglables sans palier ou par paliers en fonction d'une denture.

3. Dispositif répartiteur selon la revendication 1 ou la revendication 2,
**caractérisé en ce**
**que** le palier de rotation (7) est formé de plusieurs parties (5, 6) et l'élément rotatif (8) peut être bloqué dans le palier de rotation (7) par compression des parties (5, 6) à la manière de mâchoires de frein.

4. Dispositif répartiteur selon l'une des revendications 1 à 3,
**caractérisé en ce**
**que** les dispositifs de maintien (4) sont prévus chaque fois pour recevoir plusieurs éléments rotatifs (8) pour la liaison avec plusieurs barres omnibus (2) formant un panneau de connexion (1).

5. Dispositif répartiteur selon l'une des revendications 1 à 4,
**caractérisé en ce**
**que** l'élément rotatif (8) est réalisé sous la forme d'une partie, de préférence en forme de disque, d'un arbre.

6. Dispositif répartiteur selon l'une des revendications 1 à 5,
**caractérisé en ce**
**que** la barre omnibus (2) peut être serrée dans l'évidement (10), de préférence par une pièce de remplissage (9).

7. Dispositif répartiteur selon l'une des revendications 1 à 6,
**caractérisé en ce**
**que** pour le serrage, une seule pièce de remplissage (9) pouvant être adaptée à la section transversale de barre omnibus respective par changement de sa position est prévue par évidement (10).

8. Dispositif répartiteur selon l'une des revendications 1 à 7,
**caractérisé en ce**
**que** l'élément rotatif est réalisé en plusieurs parties, en particulier en deux parties (13, 14), de préférence de façon que la barre omnibus (2) puisse être introduite dans l'évidement (10) perpendiculairement à l'axe de rotation de l'élément rotatif à l'état démonté des parties (13, 14).

9. Dispositif répartiteur selon l'une des revendications 1 à 8,
**caractérisé en ce**
**que** l'élément rotatif (8) présente une nervure de guidage (12) en saillie radiale pour l'engagement dans une rainure de guidage dans le palier de rotation (7) ou, inversement, une rainure de guidage pour l'engagement d'une nervure de guidage correspondante sur le palier de rotation.
